(19) Europäisches Patentamt / European Patent Office / Office européen des brevets

(11) **EP 3 564 448 B1**

(12) **EUROPÄISCHE PATENTSCHRIFT**

(45) Veröffentlichungstag und Bekanntmachung des Hinweises auf die Patenterteilung:
**14.06.2023  Patentblatt 2023/24**

(21) Anmeldenummer: **19169895.0**

(22) Anmeldetag: **17.04.2019**

(51) Internationale Patentklassifikation (IPC):
***E02F 9/22*** *(2006.01)*

(52) Gemeinsame Patentklassifikation (CPC):
**E02F 9/2203**

(54) **NUTZFAHRZEUG MIT FRONTLADER**

UTILITY VEHICLE WITH FRONT LOADER

VÉHICULE UTILITAIRE À CHARGEMENT AVANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2018  DE 102018206748**

(43) Veröffentlichungstag der Anmeldung:
**06.11.2019  Patentblatt 2019/45**

(73) Patentinhaber: **Deere & Company**
**Moline, IL 61265 (US)**

(72) Erfinder: **Ballaire Dr., Frederic**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
WO-A1-2007/022546    DE-A1- 3 709 504
DE-A1- 10 150 679    FR-A1- 3 048 467
US-B1- 9 429 174

**Beschreibung**

Die Erfindung betrifft ein Nutzfahrzeug mit einem Frontlader, welcher mittels einer Montagebasis an dem Nutzfahrzeug befestigt ist und eine an der Montagebasis gelenkig angeordnete Schwinge aufweist.

In diesem Zusammenhang geht aus der US 9 429 174 B1 ein Lader mit einem Arbeitselement in Form einer Hubarmstruktur hervor, die in Bezug auf einen Tragrahmen des Laders angehoben und abgesenkt werden kann. Die Hubarmstruktur umfasst einen Hubarm, der in einem an einer Montageplatte vorgesehenen Befestigungspunkt schwenkbar gegenüber dem Tragrahmen angebracht ist. Ein als doppeltwirkender Hydraulikzylinder ausgebildeter Aktuator lässt sich seitens eines Leistungsumwandlungssystems mit unter Druck stehendem Hydraulikfluid beaufschlagen, sodass sich der Hydraulikzylinder zum Heben und Senken des Hubarms ein- und ausfahren lässt. Fas Leistungsumwandlungssystem weist ferner ein Steuerventil auf, das einlassseitig von einer Hydraulikpumpe mit Hydraulikfluid gespeist wird und ablassseitig mit einem Hydrauliksumpf in Verbindung steht. Das Steuerventil lässt sich unter anderem zwischen einer Schwimmposition, in der die beiden Zylinderkammern miteinander verbunden werden, und einer Neutralposition, in der diese voneinander getrennt sind, umschalten.

Eine insofern vergleichbare hydraulische Anordnung für einen Ausleger einer Baumaschine geht auch aus der FR 3 048 467 A1 hervor.

Der vorliegenden Erfindung liegt die Aufgabe zugrunde, Bewegungsabläufe eines Frontladers mit einfachen technischen Mitteln zu verbessern.

Diese Aufgabe wird durch ein Nutzfahrzeug mit den Merkmalen des Patentanspruchs 1 gelöst.

Weitere vorteilhafte Ausgestaltungen des erfindungsgemäßen Nutzfahrzeugs gehen aus den Unteransprüchen hervor.

Gemäß Patentanspruch 1 weist das Nutzfahrzeug einen Frontlader mit einer Montagebasis zu seiner Befestigung an dem Nutzfahrzeug, insbesondere an einer Tragstruktur des Nutzfahrzeugs, auf. Der Frontlader enthält eine an der Montagebasis gelenkig angeordnete Schwinge und einen sich an der Montagebasis sowie der Schwinge abstützenden Schwingenzylinder. Der Schwingenzylinder ist als ein doppelt wirkender Hubzylinder mit zwei Hydraulikanschüssen ausgebildet. Über die beiden Hydraulikanschlüsse ist der Schwingenzylinder an Arbeitsanschlüsse einer hydraulischen Steuerung (z.B. hydraulisches Steuergerät, Proportionalventil, 4/2-Wegeventil) angeschlossen. Die hydraulische Steuerung wiederum ist an eine hydraulische Pumpe und einen ein Hydraulikmedium (z.B. Öl) enthaltenden Hydraulikbehälter bzw. Sumpf angeschlossen. Zwischen den beiden Hydraulikanschlüssen des Schwingenzylinders und der hydraulischen Steuerung ist eine hydraulische Schaltanordnung angeschlossen bzw. zwischengeschaltet. Die Schaltanordnung kann unterschiedliche Schaltstellungen einnehmen derart, dass in einer Kurzschluss-Schaltstellung der Schaltanordnung die Pumpe an dem Hydraulikanschluss Hydraulikmedium in Richtung des Schwingenzylinders fördert, wobei die zwei Hydraulikanschlüsse des Schwingenzylinders miteinander hydraulisch verbunden sind und in einer Trenn-Schaltstellung der Schaltanordnung die zwei Hydraulikanschlüsse des Schwingenzylinders voneinander hydraulisch getrennt sind.

Diese hydraulische Schaltanordnung ermöglicht es, dass während der Betriebsabläufe des Frontladers, nämlich während der Kurzschluss-Schaltstellung, die beiden Zylinderkammern des Schwingenzylinders miteinander hydraulisch verbunden werden können. Hierdurch kann das während des Arbeitsbetriebs des Schwingenzylinders zwischen der Pumpe und dem Schwingenzylinder zu transportierende Hydraulikvolumen deutlich reduziert werden. Beispielsweise ist es beim Ausfahren des Schwingenzylinders bereits ausreichend, wenn die Pumpe ein Hydraulikvolumen fördert, welches dem aus dem Zylinderrohr herausbewegten Volumen der Kolbenstange entspricht. Der reduzierte Hydraulikfluss ermöglicht höhere Verfahrgeschwindigkeiten des Schwingenzylinders während der Betriebsabläufe des Frontladers.

Außerdem berücksichtigt die Schaltanordnung mit ihrer Trenn-Schaltstellung, dass die Hydraulikanschlüsse des Schwingenzylinders bei bestimmten hydraulischen Randbedingungen - beispielsweise bei Erreichen oder Überschreiten eines bestimmten Lastdruckes - rechtzeitig wieder voneinander getrennt werden können, um dann einen herkömmlichen Betrieb des Schwingenzylinders zu realisieren.

Somit ist es mit der hydraulischen Schaltanordnung möglich, einzelne Bewegungsabläufe des Frontladers zu optimieren. Die technischen Mittel hierfür bleiben einfach und kostengünstig, da die Schaltanordnung hydraulisch an den Schwingenzylinder und die Pumpe angeschlossen ist. Insbesondere werden keine zusätzlichen hydraulischen Leitungen und keine Anpassung einer Steuerelektronik benötigt. Die Schaltanordnung lässt sich deshalb als ein kostengünstiger hydraulischer Schaltkreis ausgestalten. Folglich kann die Schaltanordnung auch als kostengünstige und montagefreundliche Nachrüstlösung in einem Nutzfahrzeug eingesetzt werden.

Vorzugsweise handelt es sich bei dem Nutzfahrzeug um ein landwirtschaftliches Fahrzeug, insbesondere Traktor, oder um ein Nutzfahrzeug für kommunale Landschafts- oder Straßenarbeiten.

In einer bevorzugten Ausführungsform nimmt die Schaltanordnung ihre Trenn-Schaltstellung ausgehend von der Kurzschluss-Schaltstellung dann ein, wenn bei ansteigendem Lastdruck des Schwingenzylinders ein definierter oberer Grenz-Lastdruck des Schwingenzylinders erreicht oder überschritten wird. Hierdurch wird berücksichtigt, dass während der Kurzschluss-Schaltstellung die maximale Kraft des Schwingenzylinders (z.B. zum Lastenheben) geringer ist als im herkömmlichen Betrieb bei getrennten Hydraulikanschlüssen der beiden Zylinderkammern des Schwingenzylinders. Die Ursache hierfür ist die im Vergleich zur Kolben-Querschnittsfläche kleinere Kolbenstangen-Querschnittsfläche als wirksame Fläche für den Kraftaufbau. Um größere Kräfte zur Verfügung zu stellen, schaltet die Schaltanordnung in Abhängigkeit eines detektierten oberen Grenz-Lastdruckes automatisch in die Trenn-Schaltstellung um und ermöglicht einen herkömmlichen Betrieb zweier hydraulisch getrennter Zylinderkammern des Schwingenzylinders.

Ein besonders wirtschaftliches Schaltverhalten der Schaltanordnung von der Kurzschluss-Schaltstellung in die Trenn-Schaltstellung ist realisierbar, wenn der definierte obere Grenz-Lastdruck des Schwingenzylinders einem maximalen Arbeitsdruck der Pumpe abzüglich einer Druckkonstanten entspricht. Der maximale Arbeitsdruck der Pumpe beträgt z.B. 200 bar. Die vorgenannte Druckkonstante kann z.B. einen Wert von 1 bar bis 8 bar haben. Mit der Berücksichtigung der vorgenannten Druckkonstanten kann besonders einfach gewährleistet werden, dass sich die Schaltanordnung bei maximalem Pumpendruck am Schwingenzylinder in der Trenn-Schaltstellung befindet. Hierdurch können Bewegungsabläufe des Frontladers technisch einfach unterbrechungsfrei gehalten werden, da bereits vor Erreichen des maximalen Arbeitsdruckes der Pumpe von der Kurzschluss-Schaltstellung in die Trenn-Schaltstellung umgeschaltet wird.

Weiterhin ist es vorteilhaft, wenn bei sinkendem Lastdruck am Schwingenzylinder die Schaltanordnung ihre Kurzschluss-Schaltstellung bei Erreichen oder Unterschreiten eines definierten unteren Grenz-Lastdruckes des Schwingenzylinders einnimmt und wenn hierbei dieser untere Grenz-Lastdruck kleiner ist als der obere Grenz-Lastdruck. Dies ermöglicht eine sinnvolle hydraulische Hysterese der Schaltanordnung für ein stabiles Schaltverhalten zwischen der Trenn-Schaltstellung und der Kurzschluss-Schaltstellung.

Ein stabiles Schaltverhalten der Schaltanordnung mit einer ausreichend großen hydraulischen Hysterese wird unterstützt, indem der definierte untere Grenz-Lastdruck vorzugsweise durch die Gleichung

$$p\_low = ((D\_rod/D\_piston)^2 \cdot p\_high) - p\_k2$$

definiert ist, wobei p_low der definierte untere Grenz-Lastdruck, D_rod der Durchmesser einer Kolbenstange des Schwingenzylinders, D_piston der Durchmesser eines Kolbens des Schwingenzylinders, p_high der definierte obere Grenz-Lastdruck ist, und p_k2 eine Druckkonstante ist.

Dabei hat die Druckkonstante p_k2 beispielsweise einen Wert von 1 bar bis 8 bar.

In einer bevorzugten Ausführungsform enthält die Schaltanordnung eine zwischen der Kurzschluss-Schaltstellung und der Trenn-Schaltstellung umschaltbare Schalt-Ventileinheit (z.B. nach Art eines Wegeventils) mit einem hydraulischen Steuereingang, dessen Hydraulikdruck gegen einen Rückstelldruck (z.B. Rückstellfeder) der Schalt-Ventileinheit wirkt. Hierdurch kann auf standardisierte und kostengünstig erhältliche Mittel zur Realisierung des Schaltverhaltens der Schaltanordnung zurückgegriffen werden.

Für eine technisch einfache Ansteuerung der Schalt-Ventileinheit zum Umschalten von der Kurzschluss-Schaltstellung in die Trenn-Schaltstellung ist vorzugsweise eine zwischen unterschiedlichen Schaltstellungen umschaltbare obere Druckwaage vorgesehen. Diese obere Druckwaage ist mit einem Steuereingang an den einen Hydraulikanschluss des Schwingenzylinders hydraulisch angeschlossen. Weiterhin ist ein Ausgangsanschluss der oberen Druckwaage abhängig von spezifischen hydraulischen Bedingungen mit dem Steuereingang der Schalt-Ventileinheit hydraulisch verbindbar. Hierbei wirkt gegen den Steuereingang der oberen Druckwaage eine Rückstellkraft, welche dem definierten oberen Grenz-Lastdruck p_high des Schwingenzylinders entspricht. Somit unterstützt die obere Druckwaage das gewünschte Schaltverhalten der Schaltanordnung bei Erreichen oder Überschreiten des definierten oberen Grenz-Lastdruckes.

Zur Unterstützung einer hydraulisch unaufwändigen Funktionsweise der oberen Druckwaage ist es vorteilhaft, wenn deren Steuereingang mit einem Eingangsanschluss dieser Druckwaage hydraulisch verbunden ist und zusätzlich der Eingangsanschluss mit dem Ausgangsanschluss dieser Druckwaage in Abhängigkeit von der Schaltstellung dieser Druckwaage hydraulisch verbindbar ist. Hierdurch kann der aktuelle Lastdruck am Schwingenzylinder direkt verwendet werden, um sowohl die obere Druckwaage als auch die Schalt-Ventileinheit hinsichtlich der gewünschten Schaltfunktionalität zu steuern.

Vorzugsweise weist die Schaltanordnung eine untere Druckwaage mit einem Steuereingang auf, welcher an den einen Hydraulikanschluss des Schwingenzylinders hydraulisch angeschlossen ist. Außerdem ist gegen diesen Steuereingang eine Rückstellkraft wirksam, welche dem definierten unteren Grenz-Lastdruck p_low des Schwingenzylinders entspricht. Weiterhin ist ein Ausgangsanschluss der unteren Druckwaage abhängig von hydraulischen Randbedingungen mit dem Steuereingang der Schalt-Ventileinheit hydraulisch verbindbar. Eine derart ausgestaltete und dimensionierte untere Druckwaage schafft die Voraussetzung für eine hydraulisch einfache Realisierung des gewünschten Schaltverhaltens der Schaltanordnung bei sinkendem Lastdruck an dem Schwingenzylinder.

Zur Unterstützung einer hydraulisch unaufwändigen Funktionsweise der unteren Druckwaage ist es vorteilhaft, wenn deren Steuereingang mit einem Eingangsanschluss dieser Druckwaage hydraulisch verbunden ist und zusätzlich der Eingangsanschluss mit dem Ausgangsanschluss dieser Druckwaage in Abhängigkeit von der Schaltstellung dieser Druckwaage hydraulisch verbindbar ist. Hierdurch kann der aktuelle Lastdruck am Schwingenzylinder direkt verwendet werden, um sowohl die untere Druckwaage als auch die Schalt-Ventileinheit hinsichtlich der gewünschten Schaltfunktionalität zu steuern.

In einer weiteren bevorzugten Ausführungsform enthält die Schaltanordnung eine umschaltbare Zusatz-Ventileinheit. Diese wirkt in Abhängigkeit von ihrer Schaltstellung als eine trennbare hydraulische Verbindung zwischen dem Ausgangsanschluss der oberen Druckwaage und/oder dem Ausgangsanschluss der unteren Druckwaage einerseits und dem Steuereingang der Schalt-Ventileinheit andererseits. Diese Zusatz-Ventileinheit unterstützt eine hydraulisch und technisch einfache Ansteuerung der Schalt-Ventileinheit und somit einen entsprechend unaufwändigen Aufbau der Schaltanordnung bei der Realisierung der gewünschten Schaltfunktionalität.

Eine einfache und kostengünstige Konstruktion der Schaltanordnung mit wenigen Bauteilen wird weiter unterstützt, wenn die Zusatz-Ventileinheit mit der Schalt-Ventileinheit mechanisch gekoppelt ist und von einer Rückstellkraft beaufschlagt ist, welche als Rückstelldruck p_min gegen den Steuereingang der Schalt-Ventileinheit wirkt.

Vorzugsweise ist die gegen den Steuereingang der Schalt-Ventileinheit wirkende Rückstellkraft größer eingestellt als ein möglicher Rückstaudruck des Schwingenzylinders. Diese Dimensionierung der Rückstellkraft verhindert, dass das Schaltverhalten der Schalt-Ventileinheit und somit Bewegungsabläufe des Frontladers in unerwünschter Weise beeinflusst werden, wenn - aufgrund von Schaltstellungen hydraulischer Bauteile der Schaltanordnung - auch am Steuereingang der Schalt-Ventileinheit der Rückstaudruck anliegt.

Das erfindungsgemäße Nutzfahrzeug wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1      eine schematische Seitenansicht eines Traktors mit einem Frontlader,

Fig. 2      einen hydraulischen Schaltplan mit einer schematisch dargestellten Schaltanordnung zwischen einem Schwingenzylinder des Frontladers und einer hydraulischen Steuerung,

Fig. 3a      den Schaltplan gemäß Fig. 2 mit einer detaillierten Darstellung der Schaltanordnung in einer Kurzschluss-Schaltstellung während einer Hebebewegung des Frontladers,

Fig. 3b      den Schaltplan gemäß Fig. 3a mit der Schaltanordnung in einer Trenn-Schaltstellung während einer Hebebewegung des Frontladers,

Fig. 4a      den Schaltplan gemäß Fig. 2 mit einer detaillierten Darstellung der Schaltanordnung in einer Kurzschluss-Schaltstellung während einer Absenkbewegung des Frontladers,

Fig. 4b      den Schaltplan gemäß Fig. 4a mit der Schaltanordnung in einer Trenn-Schaltstellung während einer Absenkbewegung des Frontladers,

Fig. 5      den Schaltplan gemäß Fig. 2 mit einer detaillierten Darstellung der Schaltanordnung in einer Trenn-Schaltstellung bei ausfahrendem Schwingenzylinder und für die für einen Frontlader gelegentlich auftretende Betriebssituation einer am Schwingenzylinder in Ausfahrrichtung wirkenden Kraft, und

Fig. 6      den Schaltplan gemäß Fig. 2 mit einer detaillierten Darstellung der Schaltanordnung in einer Trenn-Schaltstellung bei einfahrendem Schwingenzylinder und dabei auftretendem Rückstaudruck in seiner Kolbenkammer.

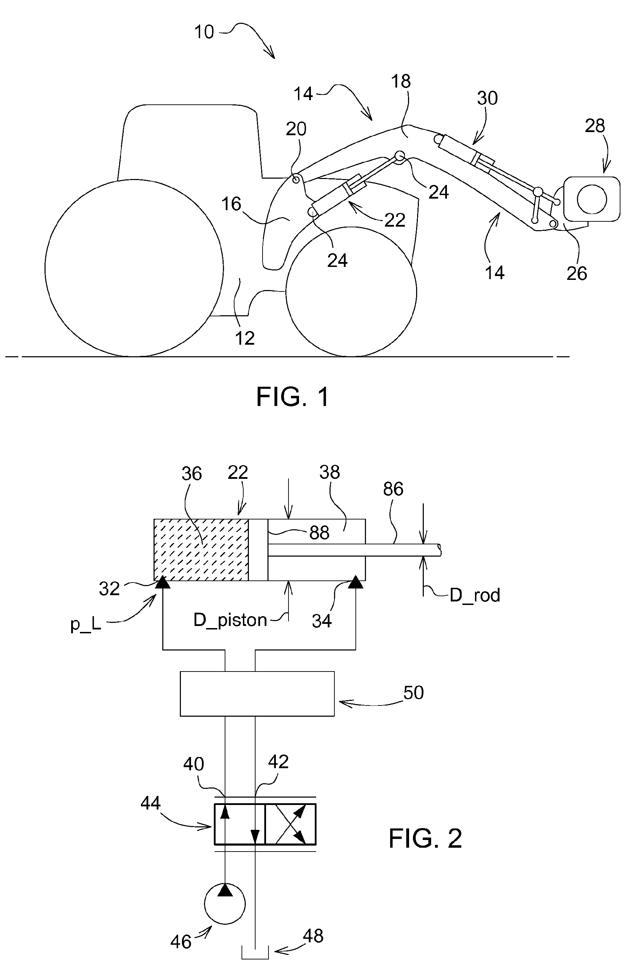

Fig. 1 zeigt schematisch ein Nutzfahrzeug in Form eines Traktors 10, an dessen Tragstruktur 12 ein Frontlader 14 reversibel befestigt ist. Der Frontlader 14 weist eine Montagebasis 16 auf, mittels der dieser beispielsweise an einer Anbaukonsole des Traktors 10 befestigt wird. An der Montagebasis 16 ist eine winkelartig abgeknickt verlaufende Schwinge 18 gelenkig angeordnet. Hierbei ist die Schwinge 18 mittels eines Basisgelenks 20 und mittels eines hydraulisch betriebenen Schwingenzylinders 22 mit der Montagebasis 16 gelenkig verbunden. Der Schwingenzylinder 22 stützt sich mit seinen beiden Zylinderlagern 24 an der Montagebasis 16 bzw. an der Schwinge 18 gelenkig ab.

An einem der Montagebasis 16 abgewandten Bereich der Schwinge 18 ist ein Werkzeugträger 26 angelenkt. Er dient in üblicher, hier nicht näher erläuterter Weise der Aufnahme eines Werkzeugs (z.B. einer Schaufel), welches wiederum eine lediglich schematisch dargestellte Last 28 trägt. An der Schwinge 18 und den Werkzeugträger 26 ist noch in üblicher Weise ein Werkzeugzylinder 30 für eine Bewegungssteuerung des Werkzeugträgers 26 angelenkt.

Es sei erwähnt, dass anhand von Fig. 1 lediglich sichtbare Bestandteile des Frontladers 14 beschrieben sind.

Gleichwohl weist der Frontlader 14 einen zweiten Satz gleichartiger Bauteile auf, welche in der Zeichenblattebene gemäß Fig. 1 hinter den sichtbaren Bestandteilen mit Parallelabstand unsichtbar angeordnet sind und gemeinsam ein Werkzeug tragen. Dabei ist der Frontlader 14 beispielsweise beiderseits des Motorraums an der Tragstruktur 12 befestigt. Die beiden Schwingenzylinder 22 sind hydraulisch parallel geschaltet. Gleiches gilt für die beiden Werkzeugzylinder 30.

Fig. 2 zeigt den Schwingenzylinder 22 als einen doppelt wirkenden Hubzylinder mit zwei Hydraulikanschlüssen 32, 34. Die Hydraulikanschlüsse 32, 34 sind jeweils einer der beiden Zylinderkammern des Schwingenzylinders 22 zugeordnet. Hierbei ist der Hydraulikanschluss 32 einer Kolbenkammer 36 und der Hydraulikanschluss 34 einer Stangenkammer 38 zugeordnet. Über die beiden Hydraulikanschlüsse 32, 34 ist der Schwingenzylinder 22 an Arbeitsanschlüsse 40, 42 einer hydraulischen Steuerung 44 (z.B. hydraulisches Steuergerät, Proportionalventil, 4/2-Wegeventil) angeschlossen. Die hydraulische Steuerung 44 wiederum ist in üblicher Weise an eine hydraulische Pumpe 46 und einen ein Hydraulikmedium (z.B. Öl) enthaltenden Hydraulikbehälter 48 bzw. Sumpf angeschlossen.

Zwischen den beiden Hydraulikanschlüssen 32, 34 einerseits und der Pumpe 46 bzw. der hydraulischen Steuerung 44 andererseits ist eine hydraulische Schaltanordnung 50 hydraulisch angeschlossen, deren unterschiedliche Schaltstellungen die hydraulische Ansteuerung des Schwingenzylinders 22 in noch zu erläuternder Weise beeinflussen.

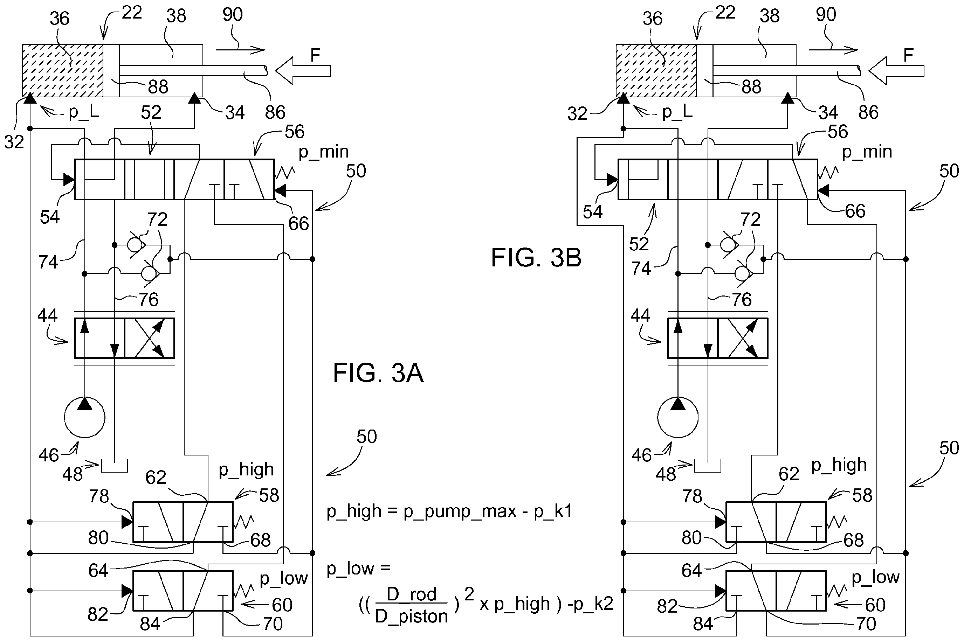

Der Aufbau der Schaltanordnung 50 wird nachfolgend anhand von Fig. 3a näher beschrieben. Die Schaltanordnung 50 enthält eine zwischen zwei unterschiedlichen Schaltstellungen umschaltbare Schalt-Ventileinheit 52. In der in Fig. 3a dargestellten Kurzschluss-Schaltstellung der Schalt-Ventileinheit 52 sind die beiden Hydraulikanschlüsse 32, 34 des Schwingenzylinders 22 kurzgeschlossen bzw. miteinander hydraulisch verbunden. In einer Trenn-Schaltstellung (Fig. 3b) der Schalt-Ventileinheit 52 sind die beiden Hydraulikanschlüsse 32, 34 voneinander hydraulisch getrennt.

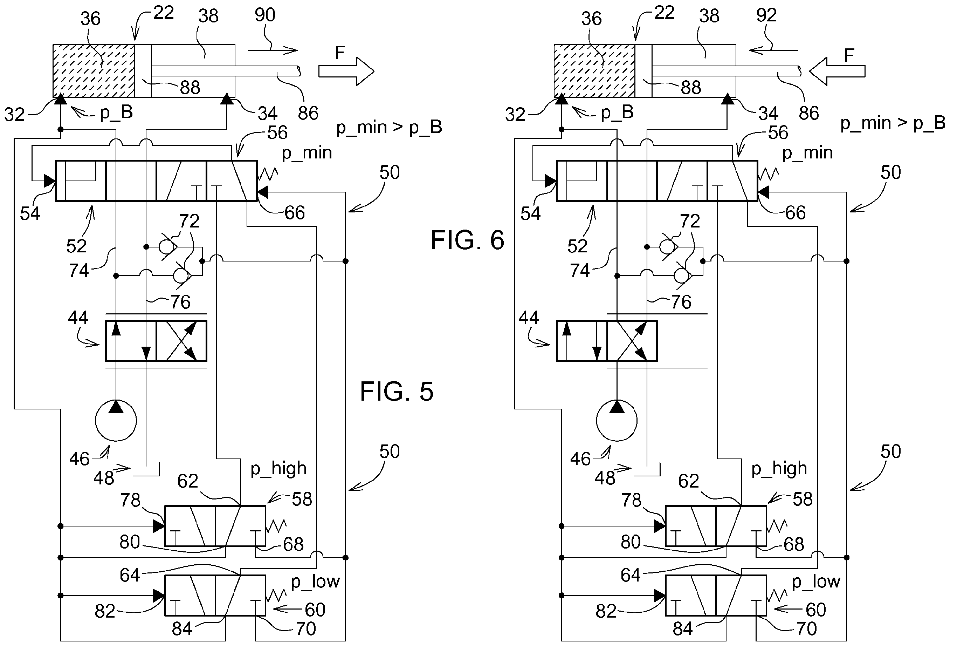

Die Schalt-Ventileinheit 52 weist einen Steuereingang 54 auf, gegen dessen Hydraulikdruck eine einem minimalen Rückstelldruck p_min entsprechende Rückstellkraft der Schalt-Ventileinheit 52 wirkt. Dieser Rückstelldruck p_min ist (insbesondere mittels einer Rückstellfeder) an einer mit der Schalt-Ventileinheit 52 mechanisch gekoppelten Zusatz-Ventileinheit 56 eingestellt. Hierdurch wird die Schalt-Ventileinheit 52 von dem minimalen Rückstelldruck p_min mittelbar beaufschlagt. Der Rückstelldruck p_min ist unter anderem derart dimensioniert, dass im Falle der in Fig. 5 bzw. Fig. 6 dargestellten Betriebssituationen eine unerwünschte Kurzschluss-Schaltstellung der Schaltanordnung 50 bzw. der Schalt-Ventileinheit 52 vermieden wird.

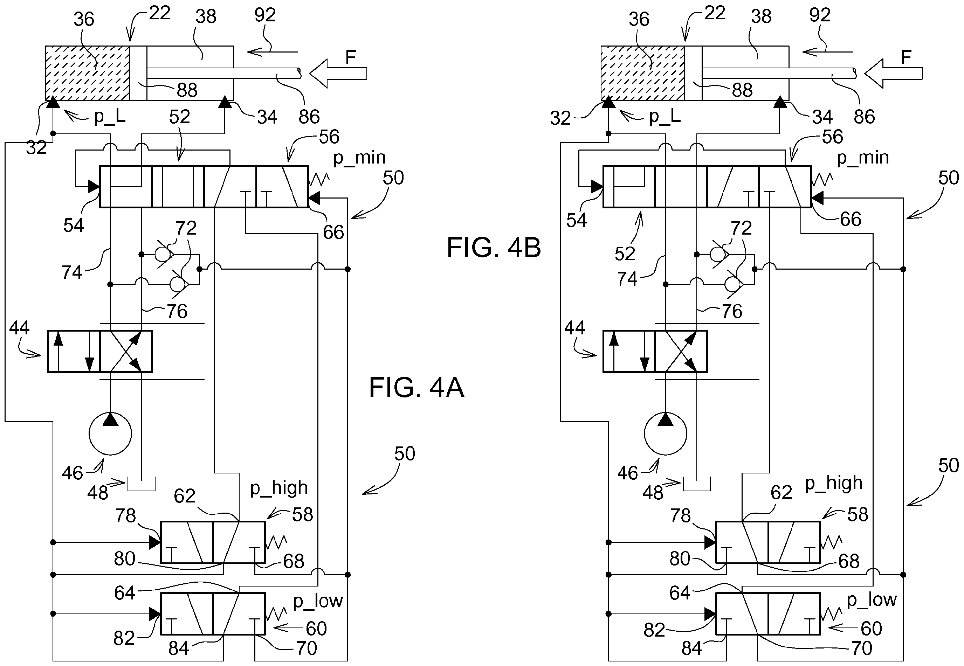

Die Zusatz-Ventileinheit 56 ist als ein 3/2-Wegeventil ausgebildet. Sie wirkt abhängig von ihrer Schaltstellung als eine trennbare hydraulische Verbindung zwischen dem Steuereingang 54 der Schalt-Ventileinheit 52 einerseits und einer oberen Druckwaage 58 bzw. einer unteren Druckwaage 60 andererseits. Dabei sind ein Ausgangsanschluss 62 der oberen Druckwaage 58 und ein Ausgangsanschluss 64 der unteren Druckwaage 60 jeweils an einen Hydraulikanschluss der Zusatz-Ventileinheit 56 angeschlossen. Weiterhin weist die Zusatz-Ventileinheit 56 an der Rückstelldruck-Seite einen Steuereingang 66 auf, der mit Hydraulikanschlüssen 68 bzw. 70 der oberen Druckwaage 58 bzw. der unteren Druckwaage 60 hydraulisch verbunden ist. Dieser Steuereingang 66 ist außerdem über zwei (im Wesentlichen leckagefreie) Rückschlagventile 72 mit zwei Leitungsabschnitten 74, 76 hydraulisch verbunden. Die beiden Leitungsabschnitte 74, 76 bilden die hydraulische Verbindung zwischen der Steuerung 44 und der Schalt-Ventileinheit 52. Mittels der Rückschlagventile 72 wird der niedrigere der beiden Hydraulikdrücke innerhalb der Leitungsabschnitte 74, 76 am Steuereingang 66 zur Verfügung gestellt. Dieser Hydraulikdruck sollte niedriger sein als derjenige in der Kolbenkammer 36 und zwar mindestens um den Betrag von p_min. Um dies beispielsweise in der Schaltstellung der hydraulischen Steuerung 44 und der Zusatz-Ventileinheit 56 gemäß Fig. 4a sicherzustellen, kann in der Schalt-Ventileinheit 52 eine (nicht gezeigte) Blende integriert sein.

Die obere Druckwaage 58 ist als ein 3/2-Wegeventil ausgebildet und mit einem Steuereingang 78 an den Hydraulikanschluss 32 des Schwingenzylinders 22 angeschlossen. Gegen den Steuereingang 78 bzw. gegen dessen Hydraulikdruck ist eine zu einem entsprechenden Rückstelldruck führende Rückstellkraft (insbesondere mittels einer Rückstellfeder) wirksam, welche derart dimensioniert ist, dass diese einem definierten oberen Grenz-Lastdruck p_high des Schwingenzylinders 22 entspricht. Ein Eingangsanschluss 80 der oberen Druckwaage 58 ist mit deren Steuereingang 78 hydraulisch verbunden. In Abhängigkeit der Schaltstellung der oberen Druckwaage 58 sind deren Eingangsanschluss 80 und Ausgangsanschluss 62 miteinander hydraulisch verbindbar.

Der obere Grenz-Lastdruck p_high ist definiert als ein maximaler Arbeitsdruck (z.B. 200 bar) der Pumpe 46 abzüglich einer Drucckonstanten p_k1, welche beispielsweise 1 bar oder einige bar, insbesondere von 3 bar bis 8 bar, beträgt.

Die untere Druckwaage 60 ist wie die obere Druckwaage 58 als ein 3/2-Wegeventil ausgebildet und mit einem Steuereingang 82 an den Hydraulikanschluss 32 des Schwingenzylinders 22 angeschlossen. Gegen den Steuereingang 82 bzw. gegen dessen Hydraulikdruck ist eine zu einem entsprechenden Rückstelldruck führende Rückstellkraft (insbesondere mittels einer Rückstellfeder) wirksam, welcher derart dimensioniert ist, dass diese einem definierten unteren Grenz-Lastdruck p_low des Schwingenzylinders 22 entspricht. Ein Eingangsanschluss 84 der unteren Druckwaage 60 ist mit deren Steuereingang 82 hydraulisch verbunden. In Abhängigkeit der Schaltstellung der unteren Druckwaage 60 sind deren Eingangsanschluss 84 und Ausgangsanschluss 64 miteinander hydraulisch verbindbar.

Der untere Grenz-Lastdruck p_low wird aus folgender Gleichung ermittelt:

$$P\_low = ((D\_rod / D\_piston)^2 \cdot p\_high) - p\_k2,$$

wobei D_rod der Stangendurchmesser einer Kolbenstange 86 des Schwingenzylinders 22, D_piston der Kolbendurchmesser eines Kolbens 88 des Schwingenzylinders 22, und p_k2 eine Druckkonstante ist.

Die Druckkonstante p_k2 der unteren Druckwaage 60 beträgt beispielsweise 1 bar oder einige bar, insbesondere hat diese einen Wert von 3 bar bis 8 bar.

Nachfolgend wird die Funktionsweise der Schaltanordnung 50 erläutert. In Fig. 3a und Fig. 3b wird der Schwingenzylinder 22 während einer Hebebewegung des Frontladers 14 ausgefahren, d.h. die Kolbenstange 86 wird in einer Ausfahrrichtung 90 ausgefahren. Eine Kraft F (Eigenmasse der Schwinge 18, Last 28, etc.) wirkt gegen die Ausfahrrichtung 90. Entsprechend befindet sich in Fig. 3a die hydraulische Steuerung 44 in ihrer Betriebs- oder Schaltstellung "Zylinder ausfahren". Der aktuelle Lastdruck p_L des Schwingenzylinders 22 ist in Fig. 3a kleiner als der definierte obere Grenz-Lastdruck p_high an der oberen Druckwaage 58. Bei den hydraulischen Bedingungen gemäß Fig. 3a befindet sich die Schalt-Ventileinheit 52 in ihrer Kurzschluss-Schaltstellung, d.h. die beiden Zylinderkammern 36, 38 bzw. die beiden Hydraulikanschlüsse 32, 34 sind hydraulisch kurzgeschlossen. Die obere Druckwaage 58 und die Zusatz-Ventileinheit 56 befinden sich jeweils in einer spezifischen Schaltstellung, welche dafür sorgt, dass an dem Steuereingang 54 der Schalt-Ventileinheit 52 etwa der aktuelle Lastdruck p_L des Schwingenzylinders 22 anliegt. Der Hydraulikdruck am Steuereingang 54 ist deshalb größer als die Summe des minimalen Rückstelldrucks p_min und des niedrigeren der beiden Hydraulikdrücke in den Leitungsabschnitten 74, 76. Der Rückstelldruck p_min ist derart dimensioniert, dass dieser etwas größer ist als der größtmöglich auftretende Rückstaudruck p_B in der Kolbenkammer 36 (Fig. 6). Die Schalt-Ventileinheit 52 bzw. die Schaltordnung 50 bleibt deshalb bei einem Lastdruck p_L < p_high zuverlässig in ihrer Kurzschluss-Schaltstellung. Hierdurch muss deutlich weniger Hydraulikmedium von der Pumpe 46 gefördert werden, und die Bewegungen des Schwingenzylinders 22 können schneller erfolgen. Die Bewegungsabläufe des Frontladers 14 sind entsprechend effizienter.

Wegen der Kurzschluss-Schaltstellung bildet in Fig. 3a allerdings die Querschnittsfläche der Kolbenstange 86 - und nicht die Querschnittsfläche des Kolbens 88 - die wirksame Druckfläche. Bei ansteigender Kraft F kann deshalb der Lastdruck p_L rasch ansteigen und einen maximalen Arbeitsdruck p_pump_max der Pumpe 46 erreichen. Hierdurch würde der Bewegungsablauf des Frontladers 14 beeinträchtigt werden. Um dies zu vermeiden, ist die obere Druckwaage 58 derart dimensioniert, dass diese in ihre Schaltstellung gemäß Fig. 3b umschaltet, sobald ein ansteigender aktueller Lastdruck p_L den Wert p_high erreicht bzw. überschreitet. Die Steuerdrücke an den Steuereingängen 54 und 66 der Schalt-Ventileinheit 52 und der Zusatz-Ventileinheit 56 sind dann im Wesentlichen gleich. Zu diesem Zeitpunkt hat die untere Druckwaage 60 wegen p_low < p_high bereits zuvor ihre andere Schaltstellung gemäß Fig. 3b eingenommen. Wegen der dann gleichen Steuerdrücke an den Steuereingängen 54, 66 kann der Rückstelldruck p_min die Schalt-Ventileinheit 52 in ihre Trenn-Schaltstellung gemäß Fig. 3b überführen.

Ausgehend von der Schaltstellung der Schaltanordnung 50 gemäß Fig. 3b kann die am Schwingenzylinder 22 angreifende Kraft und somit auch der aktuelle Lastdruck p_L wieder kleiner werden. Sobald die Ungleichung p_L < p_high erfüllt ist, wird die obere Druckwaage 58 wieder in ihre Schaltstellung gemäß Fig. 3a überführt. Dies hat zunächst keine Auswirkung auf die Schalt-Ventileinheit 52. Sobald bei weiter sinkendem aktuellen Lastdruck p_L allerdings auch die Ungleichung p_L < p_low erfüllt ist, ist auch die untere Druckwaage 60 wieder in ihre Schaltstellung gemäß Fig. 3a überführt. Dann liegt am Steuereingang 54 der Schalt-Ventileinheit 52 etwa der aktuelle Lastdruck p_L an, der größer ist als der Steuerdruck am Steuereingang 66 der Zusatz-Ventileinheit 56 und der minimale Rückstelldruck p_min. Folglich wird die Schalt-Ventileinheit 52 wieder in ihre Kurzschluss-Schaltstellung gemäß Fig. 3a überführt.

In Fig. 4a und Fig. 4b wird der Schwingenzylinder 22 während einer Absenkbewegung des Frontladers 14 eingefahren, d.h. die Kolbenstange 86 wird in einer Einfahrrichtung 92 eingefahren. Eine Kraft F (Eigenmasse der Schwinge 18, Last 28, etc.) wirkt auf den Schwingenzylinder 22. Entsprechend befindet sich in Fig. 4a die hydraulische Steuerung 44 in ihrer Betriebs- oder Schaltstellung "Zylinder einfahren". Der aktuelle Lastdruck p_L des Schwingenzylinders 22 ist in Fig. 4a kleiner als der definierte obere Grenz-Lastdruck p_high an der oberen Druckwaage 58. Bei den hydraulischen Bedingungen gemäß Fig. 4a befindet sich die Schalt-Ventileinheit 52 in ihrer Kurzschluss-Schaltstellung, d.h. die beiden Zylinderkammern 36, 38 bzw. die beiden Hydraulikanschlüsse 32, 34 sind hydraulisch kurzgeschlossen. Bei ansteigender Kraft F und entsprechend ansteigendem aktuellen Lastdruck p_L in der Kolbenkammer 36 bzw. am Hydraulikanschluss 32 ist die Funktionsweise der Schaltanordnung 50 analog zu der Beschreibung betreffend Fig. 3a und Fig. 3b. Sobald der Lastdruck p_L den Wert p_high erreicht bzw. überschreitet, wird folglich die Schalt-Ventileinheit 52 in ihre Trenn-Schaltstellung überführt (Fig. 4b). Wird der aktuelle Lastdruck p_L wieder kleiner und sinkt unter den Wert p_low, wird die Schalt-Ventileinheit 52 wieder in ihre Kurzschluss-Schaltstellung gemäß Fig. 4a überführt.

In Fig. 5 wird der Schwingenzylinder 22 bzw. seine Kolbenstange 86 in der Ausfahrrichtung 90 ausgefahren. Eine am Schwingenzylinder 22 angreifende äußere Kraft F wirkt ebenfalls in die Ausfahrrichtung 90. Dies ist unter anderem dann der Fall, wenn der mittels des Frontladers 14 angehobene Traktor 10, beispielsweise zum Glätten des Erdbodens mittels einer an der Schwinge 18 angebrachten Schaufel, wieder vollständig auf den Erdboden abgesenkt wird. Entsprechend befindet sich in Fig. 5 die hydraulische Steuerung 44 in ihrer Betriebs- oder Schaltstellung "Zylinder ausfahren". An dem Hydraulikanschluss 32 fördert die Pumpe 46 Hydraulikmedium in Richtung des Schwingenzylinders 22. Der Pumpendruck ist kleiner als der entsprechend definierte minimale Rückstelldruck p_min an der Zusatz-Ventileinheit 56. Bei den hydraulischen Bedingungen gemäß Fig. 5 befindet sich die Schalt-Ventileinheit 52 in ihrer Trenn-Schaltstellung, d.h. die beiden Zylinderkammern 36, 38 bzw. die beiden Hydraulikanschlüsse 32, 34 sind voneinander hydraulisch getrennt. Die untere Druckwaage 60 und die Zusatz-Ventileinheit 56 sorgen mit ihrer spezifischen Schaltstellung dafür, dass an dem Steuereingang 54 der Schalt-Ventileinheit 52 etwa der Pumpendruck anliegt, der dem Druck p_B des Schwingenzylinders 22 entspricht. Solange p_B < p_min ist, bleibt die Schalt-Ventileinheit 52 bzw. die Schaltordnung 50 in der Trenn-Schaltstellung. Steigt der Pumpendruck, so nimmt auch der niedrigere der beiden Hydraulikdrücke in den beiden Leitungsabschnitten 74, 76 zu, bis auch der Pumpendruck am Steuereingang 66 anliegt. Somit liegt an beiden Steuereingängen 54 und 66 der Schalt-Ventileinheit 52 der Pumpendruck an, und der Rückstelldruck p_min hält die Schalt-Ventileinheit 52 zuverlässig in ihrer Trenn-Schaltstellung, unabhängig davon, ob die Kraft F ansteigt oder sinkt.

In Fig. 6 wird der Schwingenzylinder 22 bzw. seine Kolbenstange 86 in der Einfahrrichtung 92 eingefahren. Eine am Schwingenzylinder 22 angreifende äußere Kraft F wirkt ebenfalls in die Einfahrrichtung 92. Dies ist zum Beispiel dann der Fall, wenn eine am Frontlader 14 bzw. dessen Schwinge 18 angebrachte Schaufel auf den Erdboden gepresst wird, um diesen zu glätten. Entsprechend befindet sich in Fig. 6 die hydraulische Steuerung 44 in ihrer Betriebs- oder Schaltstellung "Zylinder einfahren". An dem Hydraulikanschluss 32 liegt der Rückstaudruck p_B an, der immer kleiner ist als der minimale Rückstelldruck p_min an der Zusatz-Ventileinheit 56. Analog zu der Beschreibung betreffend Fig. 5 nimmt die Schaltanordnung 50 die Trenn-Schaltstellung ein und bleibt bei jedem Rückstaudruck p_B zuverlässig in ihrer Trenn-Schaltstellung, unabhängig davon, ob die Kraft F ansteigt oder sinkt.

## Patentansprüche

1.  Nutzfahrzeug (10), aufweisend einen Frontlader (14) mit

    - einer Montagebasis (16) zur Befestigung des Frontladers (14) an dem Nutzfahrzeug (10),
    - einer an der Montagebasis (16) gelenkig angeordneten Schwinge (18),
    - einem sich an der Montagebasis (16) und an der Schwinge (18) abstützenden hydraulischen Schwingenzylinder (22), welcher als ein doppelt wirkender Hubzylinder mit zwei Hydraulikanschlüssen (32, 34) ausgebildet ist, über die der Schwingenzylinder (22) an Arbeitsanschlüsse (40, 42) einer hydraulischen Steuerung (44) angeschlossen ist, die an eine hydraulische Pumpe (46) und einen ein Hydraulikmedium enthaltenden Hydraulikbehälter (48) angeschlossen ist,
    wobei zwischen den beiden Hydraulikanschlüssen (32, 34) des Schwingenzylinders (22) und der hydraulischen Steuerung (44) eine hydraulische Schaltanordnung (50) mit unterschiedlichen Schaltstellungen angeschlossen ist, derart, dass
    - in einer Kurzschluss-Schaltstellung der Schaltanordnung (50) die Pumpe (46 ) an dem Hydraulikanschluss (32) Hydraulikmedium in Richtung des Schwingenzylinders (22) fördert, wobei die zwei Hydraulikanschlüsse (32, 34) des Schwingenzylinders (22) miteinander hydraulisch verbunden sind, und
    - in einer Trenn-Schaltstellung der Schaltanordnung (50) die zwei Hydraulikanschlüsse (32, 34) des Schwingenzylinders (22) voneinander hydraulisch getrennt sind.

2.  Nutzfahrzeug nach Anspruch 1, **dadurch gekennzeichnet, dass** bei ansteigendem Lastdruck (p_L) des Schwingenzylinders (22) die Schaltanordnung (50) ihre Trenn-Schaltstellung bei Erreichen oder Überschreiten eines definierten oberen Grenz-Lastdruckes (p_high) des Schwingenzylinders (22) einnimmt.

3.  Nutzfahrzeug nach Anspruch 2, **dadurch gekennzeichnet, dass** der definierte obere Grenz-Lastdruck (p_high) des Schwingenzylinders (22) einem maximalen Arbeitsdruck (p_pump_max) der Pumpe (46) abzüglich einer Druckkonstanten (p_k1) entspricht.

4.  Nutzfahrzeug nach Anspruch 2 oder 3, **dadurch gekennzeichnet, dass** bei sinkendem Lastdruck (p_L) des Schwingenzylinders (22) die Schaltanordnung (50) ihre Kurzschluss-Schaltstellung bei Erreichen oder Unterschreiten eines definierten unteren Grenz-Lastdruckes (p_low) des Schwingenzylinders (22) einnimmt, wobei der definierte untere Grenz-Lastdruck (p_low) kleiner ist als der definierte obere Grenz-Lastdruck (p_high).

5.  Nutzfahrzeug nach Anspruch 4, **dadurch gekennzeichnet, dass** sich der definierte untere Grenz-Lastdruck (p_low) ergibt aus:

$$p\_low = ((D\_rod/D\_piston)^2 \cdot p\_high) - p\_k2,$$

wobei p_low der definierte untere Grenz-Lastdruck, D_rod der Durchmesser einer Kolbenstange (86) des Schwingenzylinders (22), D_piston der Durchmesser eines Kolbens (88) des Schwingenzylinders (22), p_high der definierte obere Grenz-Lastdruck, und p_k2 eine Druckkonstante ist.

6. Nutzfahrzeug nach wenigstens einem der vorhergehenden Ansprüche, **dadurch gekennzeichnet, dass** die Schaltanordnung (50) eine zwischen der Kurzschluss-Schaltstellung und der Trenn-Schaltstellung umschaltbare Schalt-Ventileinheit (52) mit einem hydraulischen Steuereingang (54) aufweist, gegen den eine Rückstellkraft wirkt, welche dem Rückstelldruck (p_min) entspricht.

7. Nutzfahrzeug nach wenigstens einem der Ansprüche 2 bis 6, **dadurch gekennzeichnet, dass** die Schaltanordnung (50) eine zwischen unterschiedlichen Schaltstellungen umschaltbare obere Druckwaage (58) aufweist mit

- einem Steuereingang (78), welcher an den einen Hydraulikanschluss (32) des Schwingenzylinders (22) hydraulisch angeschlossen ist,
- einem Ausgangsanschluss (62), welcher mit dem Steuereingang (54) der Schalt-Ventileinheit (52) hydraulisch verbindbar ist, und
- einer gegen den Steuereingang (78) der oberen Druckwaage (58) wirksamen Rückstellkraft, welche dem definierten oberen Grenz-Lastdruck (p_high) des Schwingenzylinders (22) entspricht.

8. Nutzfahrzeug nach Anspruch 7, **dadurch gekennzeichnet, dass**

- ein Eingangsanschluss (80) der oberen Druckwaage (58) an deren Steuereingang (78) angeschlossen ist,
- der Eingangsanschluss (80) und der Ausgangsanschluss (62) der oberen Druckwaage (58) in Abhängigkeit von der Schaltstellung der oberen Druckwaage (58) miteinander hydraulisch verbindbar sind.

9. Nutzfahrzeug nach wenigstens einem der Ansprüche 4 bis 8, **dadurch gekennzeichnet, dass** die Schaltanordnung (50) eine zwischen unterschiedlichen Schaltstellungen umschaltbare untere Druckwaage (60) aufweist mit

- einem Steuereingang (82), welcher an den einen Hydraulikanschluss (32) des Schwingenzylinders (22) hydraulisch angeschlossen ist,
- einem Ausgangsanschluss (64), welcher mit dem Steuereingang (54) der Schalt-Ventileinheit (52) hydraulisch verbindbar ist, und
- einer gegen den Steuereingang (82) der unteren Druckwaage (60) wirksamen Rückstellkraft, welche dem definierten unteren Grenz-Lastdruck (p_low) des Schwingenzylinders (22) entspricht.

10. Nutzfahrzeug nach Anspruch 9, **dadurch gekennzeichnet, dass**

- ein Eingangsanschluss (84) der unteren Druckwaage (50) an deren Steuereingang (82) angeschlossen ist,
- der Eingangsanschluss (84) und der Ausgangsanschluss (64) der unteren Druckwaage (60) in Abhängigkeit von der Schaltstellung der unteren Druckwaage (60) miteinander hydraulisch verbindbar sind.

11. Nutzfahrzeug nach wenigstens einem der Ansprüche 6 bis 10, **dadurch gekennzeichnet, dass** die Schaltanordnung (50) eine umschaltbare Zusatz-Ventileinheit (56) aufweist, welche in Abhängigkeit von ihrer Schaltstellung als eine trennbare hydraulische Verbindung zwischen dem Ausgangsanschluss (62) der oberen Druckwaage (58) und/oder dem Ausgangsanschluss (64) der unteren Druckwaage (60) einerseits und dem Steuereingang (54) der Schalt-Ventileinheit (52) andererseits wirkt.

12. Nutzfahrzeug nach Anspruch 11, **dadurch gekennzeichnet, dass** die Zusatz-Ventileinheit (56) mit der Schalt-Ventileinheit (52) mechanisch gekoppelt und von einer Rückstellkraft, welche dem Rückstelldruck (p_min) entspricht, beaufschlagt ist, welche gegen den Steuereingang (54) der Schalt-Ventileinheit (52) wirkt.

13. Nutzfahrzeug nach wenigstens einem der Ansprüche 6 bis 12, **dadurch gekennzeichnet, dass** der gegen den Steuereingang (54) der Schalt-Ventileinheit (52) wirkende Rückstelldruck (p_min) größer ist als ein Rückstaudruck (p_B) des Schwingenzylinders (22).

**Claims**

1. Utility vehicle (10), having a frontloader (14) with

 - an installation base (16) for fastening the frontloader (14) to the utility vehicle (10),
 - a swing arm (18) arranged on the installation base (16) in an articulated manner,
 - a hydraulic swing arm cylinder (22) which is supported on the installation base (16) and on the swing arm (18) and which is constructed as a double-acting lifting cylinder with two hydraulic connections (32, 34), via which the swing arm cylinder (22) is connected to working connections (40, 42) of a hydraulic controller (44), which is connected to a hydraulic pump (46) and to a hydraulic container (48) containing a hydraulic medium, wherein a hydraulic switching arrangement (50) having different switching positions is connected between the two hydraulic connections (32, 34) of the swing arm cylinder (22) and the hydraulic controller (44) in such a way that
 - in a short-circuited switching position of the switching arrangement (50), the pump (46) on the hydraulic connection (32) delivers hydraulic medium in the direction of the swing arm cylinder (22), the two hydraulic connections (32, 34) of the swing arm cylinder (22) being connected hydraulically to each other, and
 - in a separated switching position of the switching arrangement (50), the two hydraulic connections (32, 34) of the swing arm cylinder (22) are separated hydraulically from each other.

2. Utility vehicle according to Claim 1, **characterized in that** as the load pressure (p_L) in the swing arm cylinder (22) rises, the switching arrangement (50) assumes its separated switching position when a defined upper limiting load pressure (p_high) of the swing arm cylinder (22) is reached or exceeded.

3. Utility vehicle according to Claim 2, **characterized in that** the defined upper limiting load pressure (p_high) of the swing arm cylinder (22) corresponds to a maximum working pressure (p_pump_max) of the pump (46) minus a pressure constant (p_k1).

4. Utility vehicle according to Claim 2 or 3, **characterized in that** as the load pressure (p_L) of the swing arm cylinder (22) falls, the switching arrangement (50) assumes its short-circuited switching position when a defined lower limiting load pressure (p_low) of the swing arm cylinder (22) is reached or undershot, the defined lower limiting load pressure (p_low) being lower than the defined upper limiting load pressure (p_high).

5. Utility vehicle according to Claim 4, **characterized in that** the defined lower limiting load pressure (p_low) is given by:

$$\texttt{p\_low = ((D\_rod/D\_piston)}^2 \cdot \texttt{p\_high) - p\_k2,}$$

 where p_low is the defined lower limiting load pressure, D_rod is the diameter of a piston rod (86) of the swing arm cylinder (22), D_piston is the diameter of a piston (88) of the swing arm cylinder (22), p_high is the defined upper limiting load pressure, and p_k2 is a pressure constant.

6. Utility vehicle according to at least one of the preceding claims, **characterized in that** the switching arrangement (50) has a switching valve unit (52) which can be switched between the short-circuited switching position and the separated switching position and has a hydraulic control inlet (54), against which a restoring force which corresponds to the restoring pressure (p_min) acts.

7. Utility vehicle according to at least one of Claims 2 to 6, **characterized in that** the switching arrangement (50) has an upper pressure compensator (58) which can be switched between different switching positions, having

 - a control inlet (78), which is connected hydraulically to the one hydraulic connection (32) of the swing arm cylinder (22),
 - an outlet connection (62), which can be connected hydraulically to the control inlet (54) of the switching valve unit (52), and
 - a restoring force which acts against the control inlet (78) of the upper pressure compensator (58) and which corresponds to the defined upper limiting load pressure (p_high) of the swing arm cylinder (22).

8. Utility vehicle according to Claim 7, **characterized in that**

- an inlet connection (80) of the upper pressure compensator (58) is connected to its control inlet (78),
- the inlet connection (80) and the outlet connection (62) of the upper pressure compensator (58) can be connected hydraulically to each other, depending on the switching position of the upper pressure compensator (58).

9. Utility vehicle according to at least one of Claims 4 to 8, **characterized in that** the switching arrangement (50) has a lower pressure compensator (60) which can be switched between different switching positions, having

- a control inlet (82), which is connected hydraulically to the one hydraulic connection (32) of the swing arm cylinder (22),
- an outlet connection (64), which can be connected hydraulically to the control inlet (54) of the switching valve unit (52), and
- a restoring force which acts against the control inlet (82) of the lower pressure compensator (60) and which corresponds to the defined lower limiting load pressure (p_low) of the swing arm cylinder (22).

10. Utility vehicle according to Claim 9, **characterized in that**

- an inlet connection (84) of the lower pressure compensator (60) is connected to its control inlet (82), and
- the inlet connection (84) and the outlet connection (64) of the lower pressure compensator (60) can be connected hydraulically to each other, depending on the switching position of the lower pressure compensator (60).

11. Utility vehicle according to at least one of Claims 6 to 10, **characterized in that** the switching arrangement (50) has an additional switching valve unit (56), which, depending on its switching position, on the one hand acts as a separable hydraulic connection between the outlet connection (62) of the upper pressure compensator (58) and/or the outlet connection (64) of the lower pressure compensator (60), and on the other hand acts on the control inlet (54) of the switching valve unit (52).

12. Utility vehicle according to Claim 11, **characterized in that** the additional valve unit (56) is coupled mechanically to the switching valve unit (52) and is loaded by a restoring force which corresponds to the restoring pressure (p_min) and which acts against the control inlet (54) of the switching valve unit (52).

13. Utility vehicle according to at least one of Claims 6 to 12, **characterized in that** the restoring pressure (p_min) acting against the control inlet (54) of the switching valve unit (52) is higher than a restoring back pressure (p_B) of the swing arm cylinder (22).

**Revendications**

1. Véhicule utilitaire (10) comportant un chargeur frontal (14) pourvu

- d'une base de montage (16) destinée à la fixation du chargeur frontal (14) au véhicule utilitaire (10),
- d'une bascule (18) disposée de manière articulée sur la base de montage (16),
- d'un vérin hydraulique à bascule (22) qui est en appui sur la base de montage (16) et sur la bascule (18) et qui est conçu comme un vérin de levage à double effet qui comprend deux raccords hydraulique (32, 34) qui permettent de raccorder le vérin à bascule (22) à des raccords de travail (40, 42) d'une commande hydraulique (44) qui est raccordée à une pompe hydraulique (46) et à un réservoir hydraulique (48) contenant un milieu hydraulique,
un ensemble de commutation hydraulique (50) comportant différentes positions de commutation étant raccordé entre les deux raccords hydrauliques (32, 34) du vérin à bascule (22) et la commande hydraulique (44) de manière à ce que
- dans une première position de commutation de court-circuit de l'ensemble de commutation (50), la pompe (46) transporte le milieu hydraulique au niveau du raccord hydraulique (32) en direction du vérin à bascule (22), les deux raccords hydrauliques (32, 34) du vérin à bascule (22) étant reliés hydrauliquement l'un à l'autre, et
- dans une position de commutation de séparation de l'ensemble de commutation (50), les deux raccords hydrauliques (32, 34) du vérin à bascule (22) sont séparés hydrauliquement l'un de l'autre.

2. Véhicule utilitaire selon la revendication 1, **caractérisé en ce que**, lorsque la pression de charge (p_L) du vérin à bascule (22) augmente, l'ensemble de commutation (50) occupe sa position de commutation de séparation lorsqu'une pression de charge limite supérieure définie (p_high) du vérin à bascule (22) est atteinte ou franchie vers le haut.

3. Véhicule utilitaire selon la revendication 2, **caractérisé en ce que** la pression de charge limite supérieure définie (p_high) du vérin à bascule (22) correspond à une pression de travail maximale (p_pump_max) de la pompe (46) moins une constante de pression (p_k1).

4. Véhicule utilitaire selon la revendication 2 ou 3, **caractérisé en ce que**, lorsque la pression de charge (p_L) du vérin à bascule (22) diminue, l'ensemble de commutation (50) prend sa position de commutation de court-circuit lorsqu'une pression de charge limite inférieure définie (p_low) du vérin à bascule (22) est atteinte ou franchie vers le bas, la pression de charge limite inférieure définie (p_low) étant inférieure à la pression de charge limite supérieure définie (p_high).

5. Véhicule utilitaire selon la revendication 4, **caractérisé en ce que** la pression de charge limite inférieure définie (p_low) résulte de :

$$p\_low = ((D\_rod/D\_piston)^2 \cdot p\_high) - p\_k2,$$

p_low étant la pression de charge limite inférieure définie, D_rod étant le diamètre d'une tige de piston (86) du vérin à bascule (22), D_piston étant le diamètre d'un piston (88) du vérin à bascule (22), p_high étant la pression de charge limite supérieure définie et p_k2 étant une constante de pression.

6. Véhicule utilitaire selon l'une au moins des revendications précédentes, **caractérisé en ce que** l'ensemble de commutation (50) comporte une unité de soupape de commutation (52) qui peut être commutée entre la position de commutation de court-circuit et la position de commutation de séparation et qui comprend un entrée de commande hydraulique (54) contre laquelle agit une force de rappel qui correspond à la pression de rappel (p_min).

7. Véhicule utilitaire selon l'une au moins des revendications 2 à 6, **caractérisé en ce que** l'ensemble de commutation (50) comporte un compensateur de pression supérieur (58) commutable entre différentes positions de commutation et comprenant

   - une entrée de commande (78) qui est raccordée hydrauliquement à un raccord hydraulique (32) du vérin à bascule (22),
   - un raccord de sortie (62) qui peut être relié hydrauliquement à l'entrée de commande (54) de l'unité de soupape de commutation (52), et
   - une force de rappel qui agit contre l'entrée de commande (78) du compensateur de pression supérieur (58) et qui correspond à la pression de charge limite supérieure définie (p_high) du vérin à bascule (22).

8. Véhicule utilitaire selon la revendication 7, **caractérisé en ce que**

   - un raccord d'entrée (80) du compensateur de pression supérieur (58) est raccordé à l'entrée de commande (78) de celui-ci,
   - le raccord d'entrée (80) et le raccord de sortie (62) du compensateur de pression supérieur (58) peuvent être reliés hydrauliquement l'un à l'autre en fonction de la position de commutation du compensateur de pression supérieur (58).

9. Véhicule utilitaire selon l'une au moins des revendications 4 à 8, **caractérisé en ce que** l'ensemble de commutation (50) comporte un compensateur de pression inférieur (60) commutable entre différentes positions de commutation et comprenant

   - une entrée de commande (82) qui est raccordée hydrauliquement à un raccord hydraulique (32) du vérin à bascule (22),
   - un raccord de sortie (64) qui peut être relié hydrauliquement à l'entrée de commande (54) de l'unité de soupape de commutation (52), et
   - une force de rappel qui agit contre l'entrée de commande (82) du compensateur de pression inférieur (60) et qui correspond à la pression de charge limite inférieure définie (p_low) du vérin à bascule (22).

**10.** Véhicule utilitaire selon la revendication 9, **caractérisé en ce que**

- un raccord d'entrée (84) du compensateur de pression inférieur (60) est raccordé à l'entrée de commande (82) de celui-ci,
- le raccord d'entrée (84) et le raccord de sortie (64) du compensateur de pression inférieur (60) peuvent être reliés hydrauliquement l'un à l'autre en fonction de la position de commutation du compensateur de pression inférieur (60).

**11.** Véhicule utilitaire selon l'une au moins des revendications 6 à 10, **caractérisé en ce que** l'ensemble de commutation (50) comporte une unité de soupape supplémentaire commutable (56) qui, en fonction de sa position de commutation, agit comme une liaison hydraulique séparable entre le raccord de sortie (62) du compensateur de pression supérieur (58) et/ou le raccord de sortie (64) du compensateur de pression inférieur (60) d'une part et l'entrée de commande (54) de l'unité de soupape de commutation (52) d'autre part.

**12.** Véhicule utilitaire selon la revendication 11, **caractérisé en ce que** l'unité de soupape supplémentaire (56) est accouplée mécaniquement à l'unité de soupape de commutation (52) et est sollicitée par une force de rappel qui correspond à la pression de rappel (p_min) qui agit contre l'entrée de commande (54) de l'unité de soupape de commutation (52).

**13.** Véhicule utilitaire selon l'une au moins des revendications 6 à 12, **caractérisé en ce que** la pression de rappel (p_min) qui agit contre l'entrée de commande (54) de l'unité de soupape de commutation (52) est supérieure à une contre-pression (p_B) du vérin à bascule (22) .

FIG. 1

FIG. 2

FIG. 3B

FIG. 3A

$p\_high = p\_pump\_max - p\_k1$

$p\_low = \left(\left(\dfrac{D\_rod}{D\_piston}\right)^2 \times p\_high\right) - p\_k2$

FIG. 4A

FIG. 4B

EP 3 564 448 B1

FIG. 5

FIG. 6

p_min > p_B

p_min > p_B

EP 3 564 448 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9429174 B1
- FR 3048467 A1